(19) **Europäisches Patentamt**
**European Patent Office**
**Office européen des brevets**

(11) **EP 2 794 296 B1**

(12) **FASCICULE DE BREVET EUROPEEN**

(45) Date de publication et mention de la délivrance du brevet:
**05.12.2018   Bulletin 2018/49**

(51) Int Cl.:
**B60C 9/18** *(2006.01)*       **B60C 9/20** *(2006.01)*
**B60C 9/28** *(2006.01)*       **B29D 30/06** *(2006.01)*
**B29K 105/24** *(2006.01)*     **B29K 21/00** *(2006.01)*

(21) Numéro de dépôt: **12798762.6**

(22) Date de dépôt: **12.12.2012**

(86) Numéro de dépôt international:
**PCT/EP2012/075161**

(87) Numéro de publication internationale:
**WO 2013/092326 (27.06.2013 Gazette 2013/26)**

(54) **PNEUMATIQUE ET PROCEDE DE FABRICATION D'UNE CEINTURE DE TRIANGULATION DE PNEUMATIQUE**

LUFTREIFEN UND VERFAHREN ZUR HERSTELLUNG EINES REIFENTRIANGULATIONSBANDES

TYRE AND METHOD OF MANUFACTURING A TYRE TRIANGULATION BELT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2011   FR 1161908**

(43) Date de publication de la demande:
**29.10.2014   Bulletin 2014/44**

(73) Titulaire: **Compagnie Générale des Etablissements Michelin**
**63000 Clermont-Ferrand (FR)**

(72) Inventeurs:
• **HINC, Henri**
**F-63040 Clermont-Ferrand Cedex 9 (FR)**
• **BEAUDONNET, Christian**
**F-63040 Clermont-Ferrand Cedex 9 (FR)**
• **AUBAREDE, Francis**
**F-63040 Clermont-Ferrand Cedex 9 (FR)**

(74) Mandataire: **Redouté, Gilles Pierre**
**Manufacture Française des Pneumatiques Michelin**
**CBS/CORP/J/PI - F35 - Ladoux**
**23, place des Carmes - Déchaux**
**63040 Clermont-Ferrand Cedex 9 (FR)**

(56) Documents cités:
**EP-A1- 0 664 229     WO-A1-2010/115860**

EP 2 794 296 B1

**Description**

L'invention concerne le domaine de la fabrication des pneumatiques et plus particulièrement les étapes du procédé d'assemblage au cours desquelles on réalise les composants destinés à former la ceinture de renfort sommet.

La publication WO 2010/115860 décrit un pneumatique dans lequel la ceinture de renfort sommet est formée par la collaboration de la nappe de renfort carcasse avec des renforts parallèles à la direction circonférentielle du pneumatique, et avec une ceinture de triangulation consistant essentiellement en des laizes élémentaires de section aplatie formant un angle donné avec la direction circonférentielle du pneumatique. Ces laizes se présentent sous la forme de bandes plates juxtaposées les unes aux autres dans le sens circonférentiel, et font un angle donné avec ladite direction circonférentielle.

Les laizes élémentaires peuvent être obtenues à partir de feuillards métalliques, composites ou polymères. A titre d'exemple, la publication WO2010/115861 décrit des types particulièrement avantageux de matériaux conformes à cette utilisation, et réalisés à partir d'éléments stratifiés multicouches comportant au moins un film de thermoplastique étiré multiaxialement.

On observe à ce stade, que la réalisation d'une ébauche de pneumatique comprenant une ceinture de triangulation du type décrit dans la demande de brevet citée ci-dessus et prévoyant la pose de ces laizes élémentaires une à une, à partir d'une bandelette de largeur égale à la largeur des laizes élémentaires, nécessite de concevoir des moyens appropriés à cette opération.

La présente demande a pour objet de décrire un procédé de réalisation d'une ébauche de pneumatique comprenant des ceintures de triangulation du type ci-dessus, présentant l'avantage de pouvoir être mis en oeuvre sans qu'il soit nécessaire de modifier lourdement les dispositifs d'assemblage couramment employés dans l'industrie.

L'invention propose de modifier légèrement la construction de la ceinture de triangulation et de tirer parti de la nature des matériaux qui la composent.

Le pneumatique selon l'invention possède une armature de sommet comprenant au moins une ceinture de triangulation du sommet de largeur donnée, consistant essentiellement en des laizes élémentaires de section aplatie de largeur donnée, formant un angle compris entre 10° et 80° avec la direction circonférentielle du pneumatique et séparées par un sillon traversant de largeur donné. Ce pneumatique se caractérise en ce que chaque laize élémentaire est relié par un ou plusieurs ponts fragiles à au moins une des laizes élémentaire qui lui est directement juxtaposée.

On entend ici par fragile la propriété que possèdent des matériaux composants les ponts de se rompre sous l'effet des contraintes mécaniques qu'on leur impose. La fracture desdits ponts, qui forment des points de faiblesse localisés, n'exige qu'une faible énergie. Dans le cas d'espèce du pneumatique et de la présente demande, on considère que les ponts se fractionnent lors de la conformation en presse et de la mise en tension circonférentielle de l'ébauche de pneumatique, au moment de la mise en pression de l'enveloppe lors de l'opération de montage, et que les derniers ponts cèdent au bout des premiers kilomètres de roulage sans que cela n'affecte la performance du pneumatique pendant cette brève période.

Ainsi, après rupture complète de tous les ponts reliant les laizes élémentaires entre elles, on se retrouve dans la configuration d'un pneumatique identique au pneumatique décrit dans la publication WO2010/115861 citée ci-dessus.

On s'attache donc comme on le verra par la suite, à définir des ponts dont la géométrie est compatible avec l'exigence de fragilité énoncée ci-dessus, afin de s'assurer de leur rupture dans la toute première période d'utilisation du pneumatique.

Préférentiellement, l'armature sommet se compose de ladite ceinture de triangulation, des fils de renfort carcasse orientés radialement et reliant les deux bourrelets, et d'une ceinture de frettage consistant essentiellement en des renforts parallèles à la direction circonférentielle.

Préférentiellement les sillons sont rectilignes.

Préférentiellement, les laizes élémentaires sont formées à partir d'une feuille de matériau métallique, d'un polymère, ou d'un composite multicouches comportant au moins un film de thermoplastique étiré multiaxialement.

Le procédé de fabrication d'une bande continue destinée à la fabrication de la ceinture de triangulation du sommet d'un pneumatique selon l'invention prévoit les étapes au cours desquelles :

- on déroule une bande primaire continue de largeur donnée,
- à l'aide d'un moyen de découpe on réalise, selon un pas défini et un angle prédéfini compris entre 0° et 90° avec la direction longitudinale de la bande primaire, des sillons traversant non continus, d'une largeur et d'une longueur données, parallèles entre eux, de sorte que l'espace séparant deux sillons colinéaires forme un pont fragile de largeur donnée, de manière à former une bande continue entaillée.

On obtient de la sorte une bande continue, destinée à la fabrication de la ceinture de triangulation du sommet d'un pneumatique, comportant des sillons traversant ladite bande de part en part interrompus par des ponts permettant de conserver le caractère continu de la bande. Celle-ci peut de ce fait être enroulée et déroulée pour être utilisée commodément dans les étapes ultérieures du procédé.

Lorsque la bande ne présente pas de propriétés d'adhésion particulières avec une composition de caoutchouc, consécutivement aux étapes décrites ci-dessus, on enduit les faces de la bande continue entaillée d'une composition apte à favoriser l'adhérence entre la surface de la bande et une composition de caoutchouc,

Selon un premier mode de réalisation du procédé, lorsque l'on cherche à utiliser des bandes primaires de grande largeur on s'arrange pour que l'angle des sillons par rapport à la direction longitudinale de la bande primaire soit égal à zéro, et consécutivement aux étapes précédentes :

- à l'aide d'un moyen de calandrage on dépose sur au moins une face de la bande primaire entaillée et/ou enduite, une couche d'une composition de caoutchouc pour former une bande entaillée et calandrée,
- on sectionne la bande primaire entaillée et calandrée en tronçons élémentaires selon une ligne de coupe faisant un angle donné $\alpha$ avec la direction longitudinale de la bande entaillée et calandrée,
- on aboute par leurs lisières respectives lesdits tronçons élémentaires de manière à former une bande continue finale de largeur donnée, dans laquelle les sillons font un angle donné avec la direction longitudinale de la bande continue finale,
- on prélève dans ladite bande continue finale un tronçon dont la longueur correspond sensiblement à la circonférence du sommet d'un pneumatique, et on enroule ledit tronçon sur un cylindre d'assemblage de manière à former une ébauche de ceinture de triangulation sommet de largeur donnée comprenant des laizes élémentaires faisant un angle $\alpha$ avec la direction circonférentielle.

Alternativement, selon un second mode de mise en oeuvre du procédé, on peut choisir d'entailler la bande continue primaire en pratiquant des sillons faisant un angle $\alpha$ par rapport à la direction longitudinale de la bande primaire supérieur à zéro de manière à former directement une bande continue finale et, consécutivement aux étapes de réalisation des sillons, entreprendre les étapes au cours desquelles :

- on prélève dans ladite bande continue finale de largeur donnée correspondant à la largeur de la ceinture de triangulation, un tronçon dont la longueur correspond sensiblement à la circonférence du sommet d'un pneumatique, et on enroule ledit tronçon sur un cylindre d'assemblage de manière à former une ébauche de ceinture de triangulation sommet, comprenant des laizes élémentaires faisant un angle $\alpha$ avec la direction circonférentielle.

On pourra alors agencer la position des sillons et des ponts de telle sorte qu'il soit possible de relier au moins trois ponts par au moins une ligne faisant un angle donné supérieur ou égal à zéro avec la direction longitudinale de la bande finale sans que la ou lesdites lignes soient sécantes d'un seul sillon.

On peut également prévoir que les sillons latéraux disposés sur les deux parties latérales de la bande continue finale soient débouchants.

Lorsque le profil méridien du pneumatique est fortement galbé il peut être utile de prévoir que la largeur de l'extrémité des sillons latéraux située du côté débouchant soit supérieure à la largeur de l'extrémité des sillons latéraux située du côté interne de la bande continue finale.

Préférentiellement, la distance entre deux sillons consécutifs correspond à la largeur d'une laize élémentaire.

Préférentiellement les sillons sont rectilignes.

Préférentiellement, la distance orthogonale entre les sillons est variable.

La description qui suit s'appuie sur les figures 1 à 17 dans lesquelles :

- la figure 1 représente une vue en écorché d'un pneumatique selon l'art antérieur,
- la figure 2 représente une vue en écorché d'un pneumatique selon l'invention
- la figure 3 représente une vue en perspective simplifiée d'un dispositif de réalisation des sillons selon un premier mode de mise en oeuvre de l'invention,
- la figure 4 représente une vue de dessus d'une bande réalisée à l'aide du dispositif de la figure 3,
- la figure 5 représente des vues de dessus de différentes formes de réalisation des ponts,
- la figure 6 représente de manière schématique un dispositif d'enduction en continu de la bande
- la figure 7 représente de manière schématique un dispositif de calandrage de la bande,
- la figure 8 représente de manière schématique un dispositif de coupe et d'aboutage,
- la figure 9 représente une vue en coupe d'une bande et d'une lisière d'une bande après calandrage,
- la figure 10 représente une vue simplifiée d'un dispositif d'assemblage de la ceinture sommet d'un pneumatique,
- la figure 11 représente une vue en perspective simplifiée d'un dispositif de réalisation des sillons selon un deuxième mode de mise en oeuvre de l'invention,
- la figure 12 représente une vue simplifiée d'un dispositif d'assemblage de la ceinture sommet d'un pneumatique,
- la figure 13 représente une vue de dessus d'une bande selon une première disposition particulière des sillons et des ponts,
- la figure 14 représente une vue de dessus d'une bande selon une seconde disposition particulière des sillons et des ponts,
- la figure 15 représente une vue de dessus d'une bande selon une troisième disposition particulière des sillons et des ponts,
- la figure 16 représente une vue de dessus d'une bande selon une quatrième disposition particulière des sillons et des ponts,

- la figure 17 représente une vue de dessus d'une bande selon une cinquième disposition particulière des sillons et des ponts.

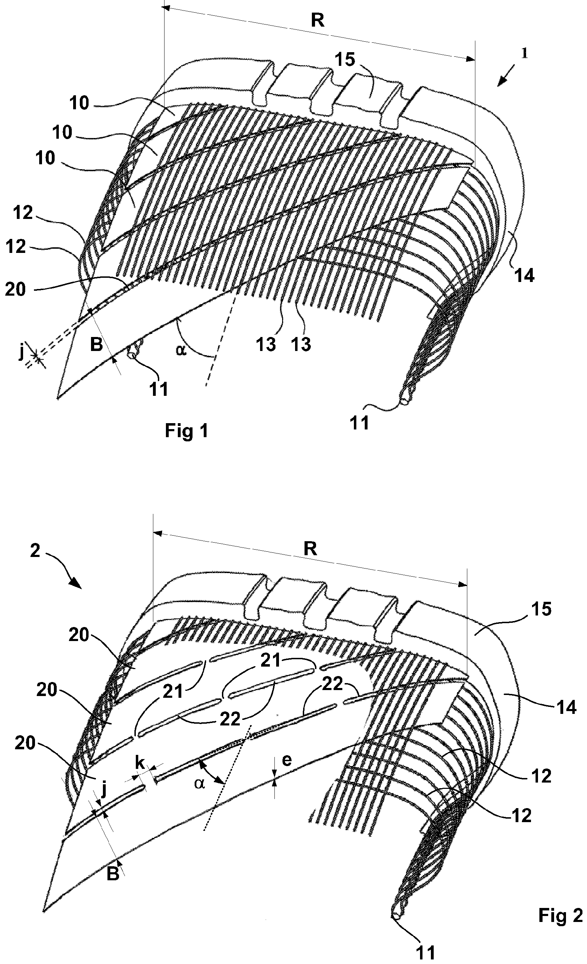

La figure 1 représente un pneumatique 1, tel que décrit dans la demande WO2010/115861, comprenant une armature sommet se composant d'une ceinture de triangulation de largeur R, formée par des laizes élémentaires 10 de largeur B, juxtaposées les unes aux autres, et formant un angle α avec la direction circonférentielle. L'espace entre les laizes élémentaires forme un sillon continu de largeur j.

L'angle α est compris entre 10° et 80°, et préférentiellement compris entre 25° et 60°. La distance orthogonale j entre deux laizes élémentaires est inférieur à la somme de leurs demi-largeurs, et de préférence inférieur à la somme de leurs demi largeur d'une valeur égale à au moins quatre fois l'épaisseur maximale e des dites laizes élémentaires.

La largeur B des laizes élémentaires est au moins égale à 5 fois leur épaisseur e, et de préférence au moins égale à 20 fois leur épaisseur maximale.

Les laizes élémentaires peuvent être formées à partir d'une feuille de métal, d'un polymère, d'un polymère thermoplastique tel que par exemple un polyéthylène téréphtalate étiré multiaxialement. Les laizes élémentaires ont de préférence un module de traction supérieur à 1 GPa.

L'armature sommet comprend également des fils de renfort carcasse 12, orientés radialement et reliant les deux bourrelets 11, ainsi qu'une ceinture de frettage formée de fils 13 enroulés sur la ceinture de triangulation et faisant un angle de valeur nulle avec la direction circonférentielle. La ceinture de frettage peut être disposée radialement au-dessus ou en dessous de la ceinture de triangulation, voire des deux côtés de ladite ceinture de triangulation. Les parties latérales du pneumatique sont protégées par des gommes de flanc 14, et la ceinture de renfort sommet est coiffée par une bande de roulement 15.

Le pneumatique 2 selon l'invention est représenté à la figure 2. Ce pneumatique ne diffère du pneumatique 1 représenté à la figure 1 qu'en ce que le sillon 22 de largeur j séparant deux laizes élémentaires 20 est interrompu par des ponts 21 de largeur k.

La largeur k des ponts est adaptée pour satisfaire à deux exigences contradictoires.

La première exigence requiert que la largeur des ponts 21 soit suffisamment faible pour pouvoir se rompre aisément lorsque le pneumatique effectue ses premiers tours de roue ou lorsque l'ébauche de pneumatique est soumise à une contrainte telle que la conformation en presse. A cet égard il a été défini expérimentalement que la largeur des ponts ne devait pas excéder une valeur égale à 10% de la largeur R de la nappe divisée par le sinus de l'angle α et par le nombre n de ponts reliant deux laizes élémentaires soit $k \leq 0,1 \times R/(n \times \sin\alpha)$, et préférentiellement rester inférieur ou égale à 5% de la largeur R de la nappe divisée par le sinus de l'angle α et par le nombre n de ponts reliant deux laizes élémentaires, soit $k \leq 0,05 \times R/(n \times \sin\alpha)$.

Cela revient en pratique à choisir une valeur de k inférieure ou égale à quatre fois et de préférence inférieure à deux fois la valeur de l'épaisseur e d'une laize élémentaire.

On observe également qu'une valeur faible de la largeur k est également suffisante pour résister aux forces de traction s'exerçant sur la bande continue entaillée pendant les étapes du procédé.

La seconde exigence impose que les ponts 21 soient suffisamment résistants pour résister aux efforts de compression que la bande entaillée est susceptible de subir, en particulier pendant les opérations de calandrage ou encore les manipulations lors des opérations de manutention ou de transfert et ayant pour effet de provoquer le flambement des ponts et la modification de la géométrie des sillons.

Aussi, en tenant compte de la nature (métal, composite) et de l'épaisseur spécifique (e) de la bande continue choisies pour la réalisation de la ceinture de triangulation, il conviendra de procéder à des essais préalables de manière à s'assurer que la bande continue entaillée peut être utilisée sans être dégradée par le procédé, et que les ponts se fractionnent après avoir exercé au plus une vingtaine de pliages successifs, ou après avoir appliqué une force de traction supérieure à celles observées sur les machines d'assemblage, et ne flambent pas sous l'effet des forces de compression rencontrées dans le procédé de calandrage.

A titre d'exemple, pour une ceinture de triangulation de 150mm de largeur, formées de laizes élémentaires en PET d'une épaisseur (e) de 0,5mm, dont les laizes élémentaires sont espacées de 2mm (j) et sont reliées par 5 ponts (21), une largeur des ponts (k) de 2mm permet de satisfaire aux deux exigences énoncées ci-dessus.

La description qui suit propose deux modes préférentiels de mise en oeuvre du procédé de réalisation d'une armature sommet.

Le procédé, selon un premier mode, prévoit de dérouler une bande primaire continue de largeur L très supérieure à la largeur R de la ceinture de triangulation.

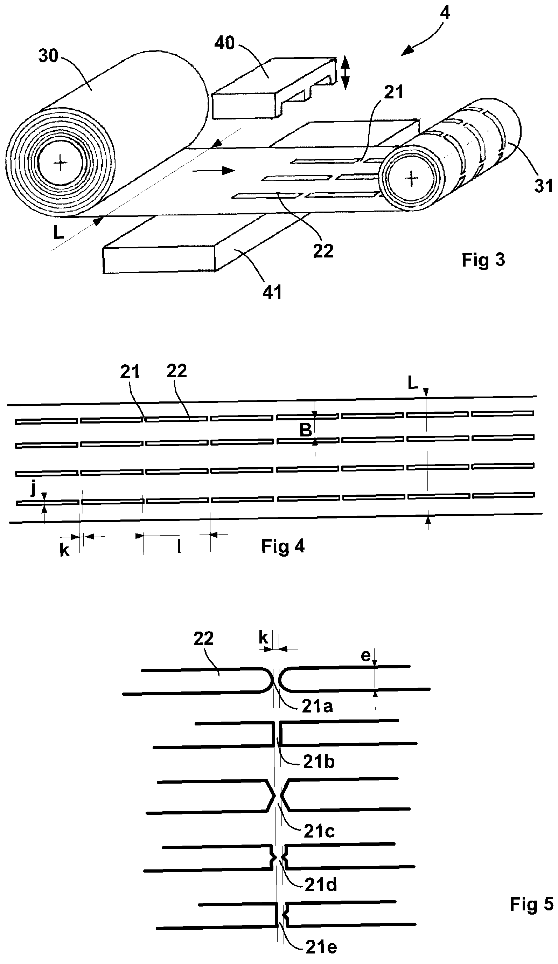

A l'aide d'un moyen de découpe 4, on réalise, selon un pas défini, des sillons sensiblement rectilignes 22 traversant la bande de part en part. L'exemple de la figure 3 prévoit un poinçon 40 se déplaçant alternativement selon une direction perpendiculaire au plan de la bande, et collaborant avec une enclume 41. Les sillons 22 sont orientés selon la direction longitudinale de la bande et sont espacés transversalement selon un écartement B correspondant à la largeur d'une laize élémentaire. Le pas entre deux coups de poinçons est ajusté pour que deux sillons colinéaires consécutifs soient espacés d'une distance k correspondant à la largeur des ponts 21 reliant les laizes élémentaires, comme cela est illustré en détail à la figure 3.

L'usage d'un poinçon et d'une enclume n'est pas limitatif, et l'homme du métier pourra utilement faire appel aux différents moyens de coupe connus, tels que par exemple la coupe à l'aide d'une simple lame, la découpe par fraisage, la coupe par jet d'eau, la coupe laser, la coupe par cisaillement, ou encore la coupe par oxycoupage dans le cas où on aurait affaire à une bande formée d'un matériau métallique.

Il va de soi que la forme des ponts peut être ajustée aux grés des applications et de la nature des matériaux employés. La figure 5 illustre de manière non limitative des formes de ponts 21 différentes et pouvant convenir à l'usage requis pour la mise en oeuvre de l'invention.

Les ponts de largeur k peuvent être de forme circulaire 21a, de forme rectangulaire 21b, de forme triangulaire ou semi triangulaire, respectivement 21c, 21d, ou de forme combinant deux des formes précédentes telle que par exemple la forme illustrée en 21e.

De même, la distance j peut être nulle, lorsque la découpe des sillons se fait à l'aide d'une simple lame.

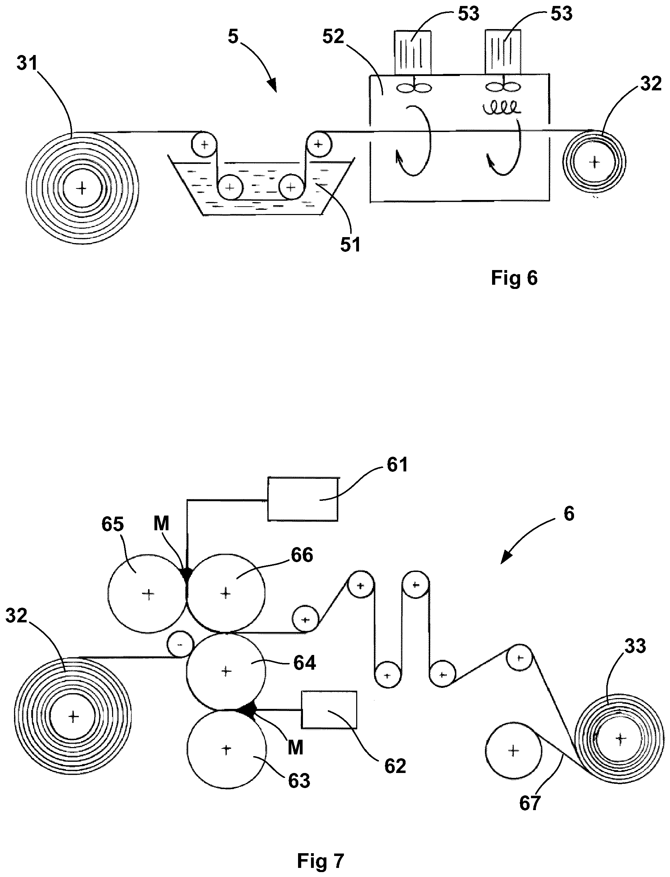

L'étape suivante du procédé, selon ce premier mode, prévoit de déposer une couche formée d'une composition de caoutchouc à l'aide par exemple d'un moyen de calandrage tel que celui qui est représenté à la figure 7.

Toutefois, il peut s'avérer utile, lorsque le matériau utilisé pour former la ceinture de triangulation ne possède pas de propriétés particulières pour adhérer au caoutchouc de procéder préalablement à l'étape de calandrage à une étape d'enduction comme cela est illustré à la figure 6.

Pour favoriser l'adhérence de la colle sur la surface de la bande, il peut s'avérer avantageux de rayer préalablement la surface de la bande, de manière à la rendre légèrement rugueuse.

L'installation 5 d'enduction prévoit de faire circuler la bande continue entaillée dans un bain 51 contentant un adhésif, à titre d'exemple du type colle RFL (Resorcinol, Formol Latex). Une fois enduite, la bande traverse une chambre de séchage 52 dans laquelle des ventilateurs 53 font circuler un courant d'air à haute température.

L'étape suivante prévoit de déposer une couche de mélange à base de caoutchouc sur une ou sur les deux faces de la bande. L'installation 6, connue en soi, comprend deux paires de cylindres 63, 64 et 65, 66 dans l'entrefer desquels est introduit à l'aide d'un outil d'alimentation, respectivement 61 et 62, un mélange M d'une composition de caoutchouc. Chaque paire de cylindre génère une feuille de caoutchouc de faible épaisseur qui est déposée sur la bande continue entaillée et enduite au niveau de l'entrefer formé par les cylindres 64 et 66.

Il est possible d'imaginer un processus dans lequel les dispositifs 4, 5 et 6 fonctionnent de manière continue sans qu'il soit nécessaire de reconditionner la bande en sortie de ces dispositifs. En pratique, la bande primaire continue 30 est reconditionnée en sortie du dispositif d'entaillage 4 pour former une bande continue entaillée 31. Cette bande continue entaillée 31 est disposée en entrée du dispositif d'enduction 5 puis reconditionnée en sortie de ce dispositif pour former une bande continue entaillée et enduite 32. Enfin la bande 32 est placée en entrée du dispositif de calandrage 6 et reconditionnée en sortie pour former une bande entaillée et calandrée 33. En raison du collant naturel du mélange de caoutchouc, il peut s'avérer utile de disposer un intercalaire 67 entre les couches de la bande calandrée 33.

La bande 33 de largeur L est ensuite amenée vers un dispositif de découpe et d'assemblage 7. Une lame 70, collaborant avec une enclume 71 découpe la bande 3 selon un angle donné $\alpha$ avec la direction longitudinale de la bande. Le pas de découpe est ajusté de manière à ce que la distance orthogonale entre deux lignes de coupe soit égale à la largeur R de la ceinture de triangulation que l'on cherche à réaliser.

Les tronçons élémentaires 33a sont alors assemblés par leurs lisières respectives Li pour former une bande continue finale 34, de largeur R, dans laquelle les sillons 22 font un angle $\alpha$ avec la direction longitudinale de la bande 34. Pour les mêmes raisons que celles exposées précédemment il peut être utile de disposer un intercalaire 73 entre les couches de la bande continue finale 34.

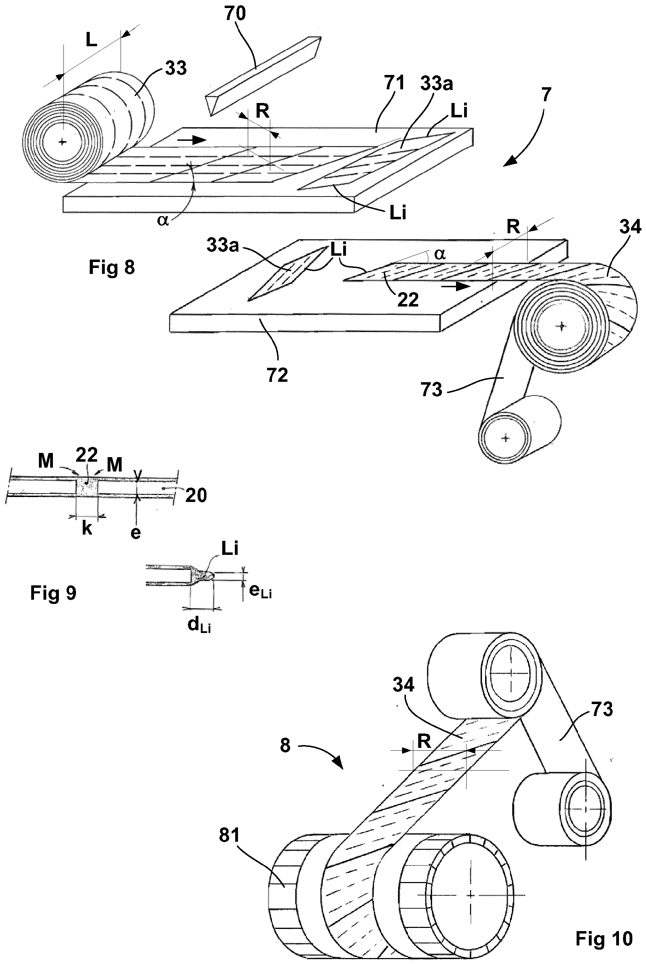

On notera à ce stade que l'aboutage des tronçons élémentaires est rendu possible par la présence d'une lisière Li, illustrée plus en détails à la figure 9, et formée d'une composition de caoutchouc non vulcanisé permettant la mise en joint des tronçons élémentaires bout à bout comme cela se pratique couramment dans l'industrie du pneumatique avec les nappes de renfort formées de fils de renforts noyés entre deux feuilles de caoutchouc.

La dernière étape du procédé consiste alors à prélever dans la bande continue finale des tronçons dont la longueur correspond sensiblement à la circonférence du sommet du pneumatique que l'on cherche à fabriquer, à amenant la bande continue finale 34 sur un dispositif d'assemblage 8, et à déposer par enroulement ledit tronçon sur un cylindre rotatif 81.

Ce procédé selon le premier mode autorise l'emploi de bandes initiales de grande largeur que l'on peut entailler et calandrer à l'aide de moyens de production de grande série, indistinctement de l'angle et de la largeur de la bande continue entaillée et calandrée finale. L'opération de coupe à angle et d'aboutage des tronçons élémentaires peut se faire à un stade ultérieur du processus d'assemblage, en fonction de la dimension précise de pneumatique que l'on cherche à réaliser.

Il résulte toutefois de cette manière de procéder une impossibilité de définir à l'avance la position et la forme des sillons.

La solution de ce problème est donnée par le deuxième mode de réalisation de l'invention.

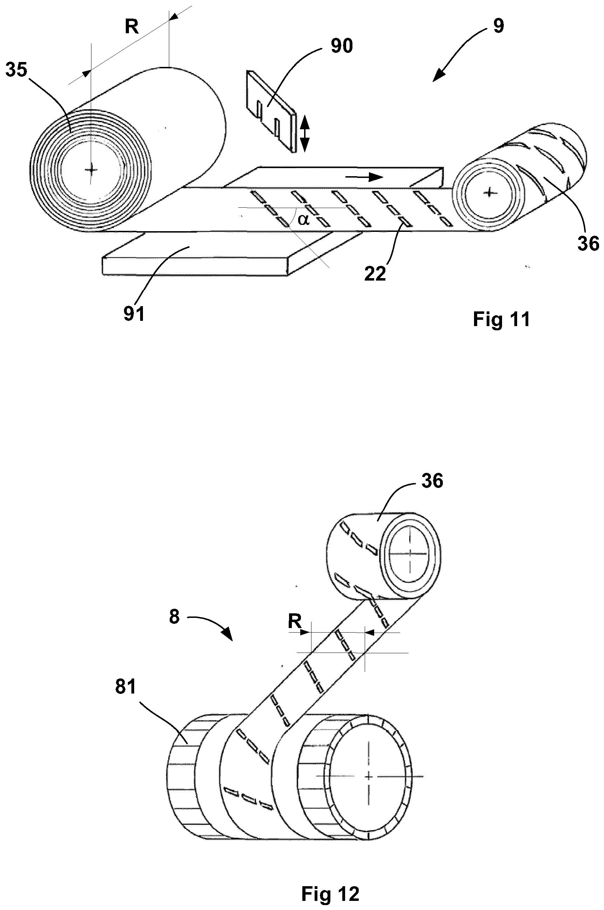

Selon ce deuxième mode, et en référence à la figure 11, la découpe, à l'aide d'un poinçon 90 collaborant avec une enclume 91, de la bande continue primaire 35 s'effectue en inclinant les sillons traversant 22 d'un angle $\alpha$ par rapport à la direction longitudinale de la bande. Ceci impose que ladite bande primaire ait une largeur R égale à la largeur de la bande de ceinture destinée à réaliser l'ébauche du pneumatique. Dans ce contexte, la largeur k des ponts 21, et la longueur l des sillons 22, est conférée directement par la forme du poinçon, et le pas du poinçon 90 est égal à $\dfrac{B}{\sin \alpha}$, où B représente la largeur d'une laize élémentaire et j la largeur du sillon 22.

La bande continue entaillée 36 peut alors, si nécessaire, être enduite d'une composition (51) apte à favoriser l'adhérence entre la surface de la bande et une composition de caoutchouc comme cela est illustré à la figure 6.

Toutefois, il n'est pas utile, comme dans le premier mode de mise en oeuvre du procédé de procéder à la dépose d'une couche de mélange de caoutchouc. En effet, il n'est plus nécessaire de découper la bande en tronçons élémentaires et d'abouter ces tronçons entre eux par leurs lisières.

La bande entaillée et encollée peut ainsi être utilisée directement sur le dispositif d'assemblage tel qu'illustré à la figure 12 au cours duquel on prélève dans ladite bande continue 36, si nécessaire préalablement encollée, un tronçon dont la longueur correspond sensiblement à la circonférence du sommet d'un pneumatique, et on enroule ledit tronçon sur un cylindre d'assemblage 81, de manière à former l'ébauche de la ceinture de triangulation sommet de largeur R et comprenant des laizes élémentaires faisant un angle $\alpha$ avec la direction circonférentielle.

Les profilés ou les renforts posés radialement au-dessus et au-dessous de la ceinture de triangulation, étant eux-mêmes formés à partir d'une composition de caoutchouc adhèrent alors directement sur la ceinture de triangulation.

On observe également que le second mode de mise en oeuvre de l'invention offre des possibilités supplémentaires quant à la forme, au nombre, et à la position des sillons et des ponts, étant entendu que ces dispositions sont conférées directement au moment du poinçonnage de la bande.

Une première application consiste à localiser les ponts 21 de manière particulière les uns par rapport aux autres. Plus précisément, la position des sillons 22 et des ponts 21 est agencée de telle sorte qu'il est possible de relier au moins trois ponts par au moins une ligne faisant un angle $\beta$ donné avec la direction longitudinale de la bande finale sans que lesdites lignes soient sécantes d'un seul sillon 22. Ces lignes sont en règle générale parallèles entre elles.

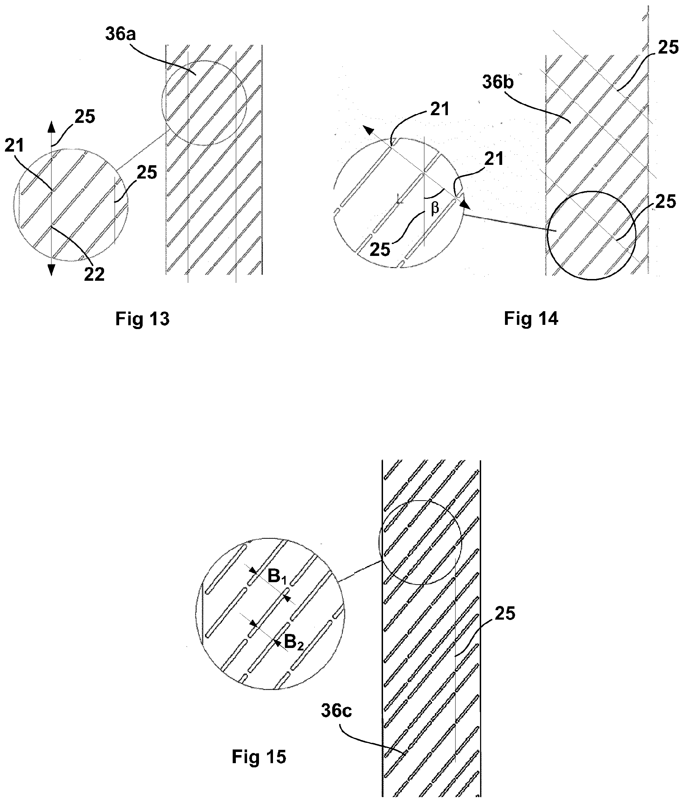

La figure 13 illustre une bande 36a, dans lequel les ponts 21 sont alignés dans la direction longitudinale de la bande, l'angle $\beta$ est alors égal à zéro. La figure 14 illustre le cas d'une bande 36b, dans lequel les lignes font un angle $\beta$ égal à $-\alpha$ avec la direction longitudinale. Il va de soi que cet angle $\beta$ peut être ajusté à volonté, et non être subi comme dans le cas du premier mode de mise en oeuvre de l'invention où l'angle $\alpha$ des sillons avec la direction circonférentielle du pneumatique n'est pas connu au moment du poinçonnage et de la découpe des sillons.

La figure 15 illustre le cas d'une bande 36c, dans laquelle, on fait varier le pas d'avance du poinçon de manière variable et connue, et dans laquelle la distance orthogonale entre deux sillons est variable, ce qui a pour objet de produire des laizes élémentaires de largeur variables, respectivement $B_1$ et $B_2$.

On observera également que la longueur l des sillons 22 peut être ajustée de sorte que la valeur égale à $\dfrac{R}{l \times \sin \alpha}$ soit une valeur entière représentant le nombre de sillons colinéaires.

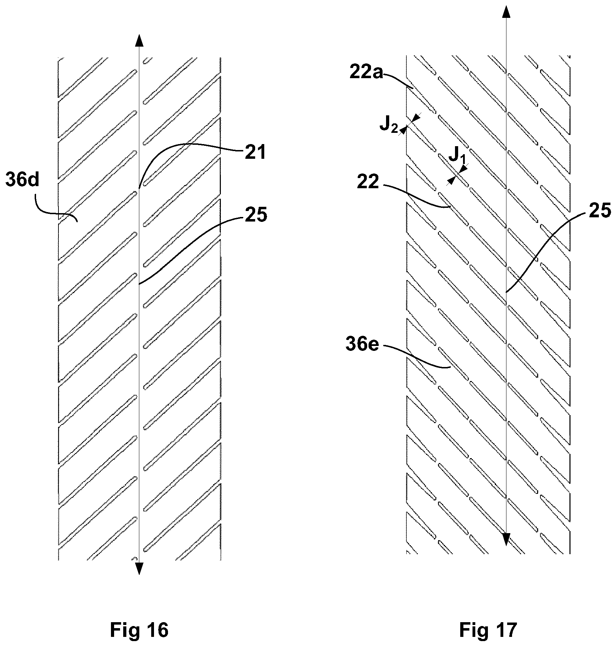

Une autre variante peut prévoir que les parties extrémales des sillons latéraux disposés sur les deux parties latérales de la bande continue finale soient non débouchantes, comme cela est illustré aux figures 13, 14 ou 15, ou débouchantes comme cela est illustré aux figures 16 et 17.

La figure 16 illustre également le cas d'une bande 36d dans lequel les ponts 21 ne sont alignés que par une seule ligne, sécante d'aucun sillon, et placée en position centrale.

Ces dispositions particulières et non limitatives des ponts, permettent d'adapter les propriétés mécaniques de la bande continue en fonction des contraintes subies pendant la mise en oeuvre du procédé selon l'invention.

La bande 36d, illustrée à la figure 17 présente la particularité d'avoir des sillons latéraux débouchants dont la largeur $J_2$ de l'extrémité située du côté débouchant est supérieure à la largeur $J_1$ de l'extrémité du sillon située du côté interne de la bande continue finale. Ce mode de réalisation présente un intérêt particulier lorsque la ceinture de triangulation formée à partir de cette bande est posée sur un sommet galbé présentant un profil méridien légèrement arrondi, et dans lequel la circonférence au centre est en règle générale supérieure à la circonférence aux épaules. La forme particulière des sillons latéraux permet alors à la ceinture de triangulation d'épouser précisément la forme gabée du sommet du pneumatique.

Les formes d'exécution décrites ci-dessus ne sont évidemment pas limitatives et l'homme du métier pourra, en utilisant en particulier le deuxième mode de mise en oeuvre du procédé selon l'invention, réaliser toutes les géométries de sillons susceptibles de satisfaire les besoins exprimés par les architectes du pneumatique, jusque et y compris des formes dans lesquelles les sillons colinéaires ne sont pas rectilignes comme cela est illustré dans les figures servant de support à la présente description, mais sont disposés sur des lignes courbes ou brisées.

## Revendications

1. Pneumatique dont l'armature de sommet comprend au moins une ceinture de triangulation du sommet de largeur donnée (R), consistant essentiellement en des laizes élémentaires (20) de section aplatie de largeur donnée (B), formant un angle ($\alpha$) compris entre 10° et 80° avec la direction circonférentielle du pneumatique et séparées par un sillon (22) de largeur donné (j) **caractérisé en ce que** chaque laize élémentaire (20) est reliée par un ou plusieurs ponts (21) fragiles à au moins une des laizes élémentaire (20) qui lui est directement juxtaposée.

2. Pneumatique selon la revendication 1, dans lequel la largeur des ponts (k) est inférieure à une valeur égale à 10% de la largeur (R) de la nappe divisée par le sinus de l'angle (a) et par le nombre (n) de ponts reliant deux laizes élémentaires (k<0,1 xR/(nxsin$\alpha$)) et de préférence inférieure à une valeur égale à 5% de la largeur (R) de la nappe divisée par le sinus de l'angle (a) et par le nombre (n) de ponts reliant deux laizes élémentaires (k<0,05xR/(nxsin$\alpha$)).

3. Pneumatique selon la revendication 1 ou 2, dans lequel l'armature sommet se compose de ladite ceinture de triangulation, des fils de renfort carcasse (12) orientés radialement et reliant les deux bourrelets (11), et d'une ceinture de frettage consistant essentiellement en des renforts (13) parallèles à la direction circonférentielle.

4. Pneumatique selon l'une des revendications 1 à 3, dans lequel les sillons (22) sont rectilignes.

5. Pneumatique selon l'une des revendications 1 à 4, dans lequel les laizes élémentaires (20) sont formées à partir d'une feuille de matériau métallique, d'un polymère, ou d'un composite multicouches comportant au moins un film de thermoplastique étiré multiaxialement.

6. Procédé de fabrication d'une bande continue destinée à la fabrication de la ceinture de triangulation du sommet d'un pneumatique selon les revendications 1 à 5, comprenant les étapes au cours desquelles :

   - on déroule une bande primaire continue (30) de largeur donnée (L, R) et d'épaisseur donnée (e),
   - à l'aide d'un moyen de découpe (40, 41, 90, 91) on réalise, selon un pas défini et un angle ($\alpha$) prédéfini compris entre 0° et 90° avec la direction longitudinale de la bande primaire, des sillons (22) traversant non continus, d'une largeur (j) et d'une longueur (l) données, parallèles entre eux, de sorte que l'espace séparant deux sillons colinéaires forme un pont (21) fragile de largeur donnée (k), dans lequel la largeur des ponts (k) est inférieure à une valeur égale à 10% de la largeur (R) de la nappe divisée par le sinus de l'angle ($\alpha$) et par le nombre (n) de ponts reliant deux laizes élémentaires (k<0,1 xR/(nxsin$\alpha$)) et de préférence inférieure à une valeur égale à 5% de la largeur (R) de la nappe divisée par le sinus de l'angle ($\alpha$) et par le nombre (n) de ponts reliant deux laizes élémentaires (k<0,05xR/(nxsin$\alpha$)), de manière à former une bande continue entaillée (31, 34)

7. Procédé selon la revendication 6, dans lequel la largeur (k) des ponts (21) est inférieure à quatre fois l'épaisseur (e) de la bande et de préférence inférieure à deux fois l'épaisseur (e) de ladite bande.

8. Procédé selon la revendication 6 ou 7, dans lequel, consécutivement aux étapes de la revendication 5, on enduit les faces de la bande continue entaillée (31, 34) d'une composition (51) apte à favoriser l'adhérence entre la surface de la bande et une composition de caoutchouc,

9. Procédé selon l'une des revendications 7 ou 8, dans lequel l'angle des sillons (22) par rapport à la direction longitudinale de la bande primaire est égal à zéro, et dans lequel, consécutivement aux étapes de la revendication 5 ou 6 :

   - à l'aide d'un moyen de calandrage (6) on dépose sur au moins une face de la bande primaire entaillée (31) et/ou enduite, une couche d'une composition de caoutchouc (M) pour former une bande entaillée et calandrée (33),
   - on sectionne la bande primaire entaillée et calandrée (33) en tronçons élémentaires (33a) selon une ligne de coupe faisant un angle donné ($\alpha$) avec la direction longitudinale de la bande entaillée et calandrée (33),
   - on aboute par leurs lisières (Li) respectives lesdits tronçons élémentaires (33a) de manière à former une bande continue finale (34) de largeur donnée (R), dans laquelle les sillons (22) font un angle donné ($\alpha$) avec la direction longitudinale de la bande continue finale (34),
   - on prélève dans ladite bande continue finale (34) un tronçon dont la longueur correspond sensiblement à la circonférence du sommet d'un pneumatique, et on enroule ledit tronçon sur un cylindre d'assemblage (81) de manière à former une ébauche de ceinture de triangulation sommet de largeur R comprenant des laizes élémentaires faisant un angle (α) avec la direction circonférentielle.

10. Procédé selon l'une des revendications 7 ou 8, dans lequel l'angle (a) des sillons (22) par rapport à la direction longitudinale de la bande primaire est supérieur à zéro de manière à former une bande continue finale (36), et dans lequel, consécutivement aux étapes de la revendication 5 ou 6,

- on prélève dans ladite bande continue finale (36) de largeur R donnée un tronçon dont la longueur correspond sensiblement à la circonférence du sommet d'un pneumatique, et on enroule ledit tronçon sur un cylindre d'assemblage (81) de manière à former une ébauche de ceinture de triangulation sommet de largeur R et comprenant des laizes élémentaires faisant un angle (α) avec la direction circonférentielle.

11. Procédé selon la revendication 10, dans lequel la position des sillons (22) et des ponts (21) est agencée de telle sorte qu'il est possible de relier au moins trois ponts (21) par au moins une ligne faisant un angle donné avec la direction longitudinale de la bande finale sans que la ou lesdites lignes soient sécantes d'un seul sillon.

12. Procédé selon l'une des revendications 10 ou 11, dans lequel les sillons latéraux disposés sur les deux parties latérales de la bande continue finale (36d, 36e) sont débouchants.

13. Procédé selon la revendication 12, dans lequel la largeur ($J_2$) de l'extrémité des sillons latéraux située du côté débouchant est supérieure à la largeur ($J_1$) de l'extrémité des sillons latéraux située du côté interne de la bande continue finale (36e).

14. Procédé selon l'une des revendications 6 à 13, dans lequel la distance entre deux sillons (22) consécutifs correspond à la largeur (B) d'une laize élémentaire (20).

15. Procédé selon l'une des revendications 6 à 14, dans lequel les sillons (22) sont rectilignes.

16. Procédé selon l'une des revendications 6 à 15, dans lequel la distance orthogonale ($B_1$, $B_2$) entre les sillons (22) est variable (36c).

**Patentansprüche**

1. Reifen, dessen Laufflächenbewehrung wenigstens einen Querversteifungsgürtel der Lauffläche mit vorgegebener Breite (R) umfasst, bestehend im Wesentlichen aus Grundbahnen (20) mit flachem Querschnitt mit vorgegebener Breite (B), einen Winkel (α) zwischen 10° und 80° mit der Umfangsrichtung des Reifens bildend und getrennt durch eine Profilrille (22) mit vorgegebener Breite (j), **dadurch gekennzeichnet, dass** jede Grundbahn (20) durch einen oder mehrere feine Stege (21) mit wenigstens einer der Grundbahnen (20), die direkt daneben liegt, verbunden ist.

2. Reifen nach Anspruch 1, wobei die Breite der Stege (k) kleiner als ein Wert gleich 10 % der Breite (R) des Mantels geteilt durch den Sinus des Winkels (α) und durch die Zahl (n) von zwei Grundbahnen verbindenden Stegen (k<0,1xR/(nxsinα)) und vorzugsweise kleiner als ein Wert gleich 5 % der Breite (R) des Mantels geteilt durch den Sinus des Winkels (α) und durch die Zahl (n) von zwei Grundbahnen verbindenden Stegen ist (k<0,05xR/(nxsinα)).

3. Reifen nach Anspruch 1 oder 2, wobei die Laufflächenbewehrung aus dem Querversteifungsgürtel, radial ausgerichteten und die zwei Wülste (11) verbindenden Karkassenverstärkungsfäden (12) und einem Versteifungsgürtel bestehend im Wesentlichen aus Verstärkungen (13) parallel zur Umfangsrichtung besteht.

4. Reifen nach einem der Ansprüche 1 bis 3, wobei die Profilrillen (22) gerade sind.

5. Reifen nach einem der Ansprüche 1 bis 4, wobei die Grundbahnen (20) aus einem Bogen aus metallischem Material, einem Polymer oder einem mehrlagigen Verbundmaterial umfassend wenigstens eine multiaxial gezogene Thermoplastfolie gebildet werden.

6. Verfahren zum Herstellen einer kontinuierlichen Bahn zur Herstellung des Querversteifungsgürtels der Lauffläche eines Reifens nach Anspruch 1 bis 5, umfassend die Schritte, im Laufe derer:

- eine kontinuierliche Hauptbahn (30) mit vorgegebener Breite (L, R) und vorgegebener Stärke (e) abgewickelt wird,
- mit einem Schneidemittel (40, 41, 90, 91) in einer definierten Teilung und einem vordefinierten Winkel (α) zwischen 0° und 90° mit der Längsrichtung der Hauptbahn nicht durchlaufende querende Profilrillen (22) mit einer vorgegebenen Breite (j) und Länge (l) parallel zueinander hergestellt werden, so dass der zwei kollineare Profilrillen trennende Raum einen feinen Steg (21) mit vorgegebener Breite (k) bildet, wobei die Breite der Stege (k) kleiner als ein Wert gleich 10 % der Breite (R) des Mantels geteilt durch den Sinus des Winkels (a) und durch die Zahl (n) von zwei Grundbahnen verbindenden Stegen (k<0,1xR/(nxsinα)) und vorzugsweise kleiner als ein Wert gleich 5 % der Breite (R) des Mantels geteilt durch den Sinus des Winkels (a) und durch die Zahl (n) von zwei Grundbahnen verbindenden Stegen ist (k<0,05xR/(nxsinα)), so dass eine gekerbte kontinuierliche Bahn (31, 34) gebildet wird.

7. Verfahren nach Anspruch 6, wobei die Breite (k) der Stege (21) kleiner als viermal die Stärke (e) der Bahn und vorzugsweise kleiner als zweimal die Stärke (e) der Bahn ist.

8. Verfahren nach Anspruch 6 oder 7, wobei nach den Schritten von Anspruch 5 die Flächen der gekerbten kontinuierlichen Bahn (31, 34) mit einem Gemisch (51) beschichtet werden, das die Haftung zwischen der Oberfläche der Bahn und einem Kautschukgemisch begünstigt.

9. Verfahren nach einem der Ansprüche 7 oder 8, wobei der Winkel der Profilrillen (22) zur Längsrichtung der Hauptbahn gleich Null ist und wobei nach den Schritten von Anspruch 5 oder 6:

   - mit einem Kalandiermittel (6) wenigstens auf einer Seite der gekerbten und/oder bestrichenen Hauptbahn (31) eine Schicht aus einem Kautschukgemisch (M) zum Bilden einer gekerbten und kalandrierten Bahn (33) aufgebracht wird,
   - die gekerbte und kalandrierte Hauptbahn (33) in Grundabschnitte (33a) in einer Schnittlinie unterteilt wird, die einen vorgegebenen Winkel (α) mit der Längsrichtung der gekerbten und kalandrierten Bahn (33) bildet,
   - die Grundabschnitte (33a) durch ihre entsprechenden Kanten (Li) so verbunden werden, dass eine fertige kontinuierliche Bahn (34) mit vorgegebener Breite (R) gebildet wird, wobei die Profilrillen (22) einen vorgegebenen Winkel (α) mit der Längsrichtung der fertigen kontinuierlichen Bahn (34) bilden,
   - in der fertigen kontinuierlichen Bahn (34) ein Abschnitt entnommen wird, dessen Länge im Wesentlichen dem Umfang der Lauffläche eines Reifens entspricht, und der Abschnitt auf einen Montagezylinder (81) so gewickelt wird, dass eine Rohform eines Laufflächen-Querversteifungsgürtels mit einer Breite R umfassend die einen Winkel (α) mit der Umfangsrichtung bildenden Grundprofilrillen gebildet wird.

10. Verfahren nach einem der Ansprüche 7 oder 8, wobei der Winkel (α) der Profilrillen (22) zur Längsrichtung der Hauptbahn größer als Null ist, so dass eine fertige kontinuierliche Bahn (36) gebildet wird, und wobei nach den Schritten von Anspruch 5 oder 6,

   - in der fertigen kontinuierlichen Bahn (36) mit der vorgegebenen Breite R ein Abschnitt entnommen wird, dessen Länge im Wesentlichen dem Umfang der Lauffläche eines Reifens entspricht, und der Abschnitt auf einen Montagezylinder (81) so gewickelt wird, dass eine Rohform eines Laufflächen-Querversteifungsgürtels mit einer Breite R umfassend die einen Winkel (α) mit der Umfangsrichtung bildenden Grundprofilrillen gebildet wird.

11. Verfahren nach Anspruch 10, wobei die Position der Profilrillen (22) und der Stege (21) so angeordnet ist, dass wenigstens drei Stege (21) durch wenigstens eine einen vorgegebenen Winkel mit der Längsrichtung der fertigen Bahn bildende Linie verbunden werden können, ohne dass die Linie(n) eine einzige Profilrille schneidet/schneiden.

12. Verfahren nach einem der Ansprüche 10 oder 11, wobei die auf den zwei seitlichen Teilen der fertigen kontinuierlichen Bahn (36d, 36e) angeordneten seitlichen Profilrillen durchgehend sind.

13. Verfahren nach Anspruch 12, wobei die Breite ($J_2$) des an der durchgehenden Seite angeordneten Endes der seitlichen Profilrillen größer ist als die Breite ($J_1$) des an der Innenseite der fertigen kontinuierlichen Bahn (36e) angeordneten Endes der seitlichen Profilrillen.

14. Verfahren nach einem der Ansprüche 6 bis 13, wobei der Abstand zwischen zwei aufeinander folgenden Profilrillen (22) der Breite (B) einer Grundbahn (20) entspricht.

15. Verfahren nach einem der Ansprüche 6 bis 14, wobei die Profilrillen (22) gerade sind.

16. Verfahren nach einem der Ansprüche 6 bis 15, wobei der orthogonale Abstand ($B_1$, $B_2$) zwischen den Profilrillen (22) variabel (36c) ist.

## Claims

1. Tyre the crown reinforcement of which comprises at least one crown triangulation belt of given width (R) essentially consisting of elementary widths (20) of flattened cross section of given width (B) forming an angle (α) comprised between 10° and 80° with the circumferential direction of the tyre and separated by a groove (22) of given width (j), **characterized in that** each elementary width (20) is connected by one or more weak bridges (21) to at least one of the elementary widths (20) which is juxtaposed directly next to it.

2. Tyre according to Claim 1, in which the width (k) of the bridges is less than a value equal to 10% of the width (R) of the ply divided by the sine of the angle ($\alpha$) and by the number (n) of bridges connecting two elementary widths ($k \leq 0.1 \times R/(n \times \sin\alpha)$) and preferably less than a value equal to 5% of the width (R) of the ply divided by the sine of the angle ($\alpha$) and by the number (n) of bridges connecting two elementary widths ($k \leq 0.05 \times R/(n \times \sin\alpha)$).

3. Tyre according to Claim 1 or 2, in which the crown reinforcement is made up of the said triangulation belt, of the carcass reinforcing threads (12) oriented radially and connecting the two beads (11), and of a hooping belt essentially consisting of reinforcers (13) which are parallel to the circumferential direction.

4. Tyre according to one of Claims 1 to 3, in which the grooves (22) are rectilinear.

5. Tyre according to one of Claims 1 to 4, in which the elementary widths (20) are formed from a sheet of metallic material, of a polymer or of a multilayer composite comprising at least one film of multiaxially stretched thermoplastic.

6. Method of manufacturing a continuous strip intended for the manufacture of the crown triangulation belt of a tyre according to Claims 1 to 5, comprising the steps during which:

   - a continuous primary strip (30) of given width (L, R) and given thickness (e) is paid out,
   - using a cutting means (40, 41, 90, 91), non-continuous mutually-parallel through-grooves (22) of a given width (j) and a given length (l) are made at a defined spacing and at a predefined angle ($\alpha$) of between 0° and 90° to the longitudinal direction of the primary strip so that the space separating two collinear grooves forms a weak bridge (21) of given width (k), wherein the width (k) of the bridges is less than a value equal to 10% of the width (R) of the ply divided by the sine of the angle ($\alpha$) and by the number (n) of bridges connecting two elementary widths ($k \leq 0.1 \times R/(n \times \sin\alpha)$ and preferably less than a value equal to 5% of the width (R) of the ply divided by the sine of the angle ($\alpha$) and by the number (n) of bridges connecting two elementary widths ($k \leq 0.05 \times R/(n \times \sin\alpha)$, so as to form a slit continuous strip (31, 34).

7. Method according to Claim 6, in which the width (k) of the bridges (21) is less than four times the thickness (e) of the strip and preferably less than twice the thickness (e) of the said strip.

8. Method according to Claim 6 or 7, in which, following the steps of Claim 5, the faces of the slit continuous strip (31, 34) are coated with a composition (51) able to encourage adhesion between the surface of the strip and a rubber composition.

9. Method according to one of Claims 7 and 8, in which the angle of the grooves (22) with respect to the longitudinal direction of the primary strip is equal to zero, and in which, following the steps of Claim 5 or 6:

   - using a calendering means (6), a layer of a rubber composition (M) is applied to at least one face of the slit and/or coated primary strip (31) to form a slit and calendered strip (33),
   - the slit and calendered primary strip (33) is cut into elementary sections (33a) along a cutting line making a given angle ($\alpha$) with the longitudinal direction of the slit and calendered strip (33),
   - the said elementary sections (33a) are butted together along their respective selvedges (Li) to form a final continuous strip (34) of given width (R), in which strip the grooves (22) make a given angle ($\alpha$) with the longitudinal direction of the final continuous strip (34),
   - a section the length of which corresponds substantially to the circumference of the crown of a tyre is taken from the said final continuous strip (34) and the said portion is wrapped around a tyre-building drum (81) to form a green form of a crown triangulation belt of width R comprising elementary widths making an angle $\alpha$ with the circumferential direction.

10. Method according to one of Claims 7 and 8, in which the angle ($\alpha$) of the grooves (22) with respect to the longitudinal direction of the primary strip is greater than zero so as to form a final continuous strip (36), and in which, following the steps of Claim 5 or 6:

   - a section the length of which corresponds substantially to the circumference of the crown of a tyre is taken from the said final continuous strip (36) of given width R and the said portion is wrapped around a tyre-building drum (81) to form a green form of a crown triangulation belt of width R comprising elementary widths making an angle ($\alpha$) with the circumferential direction.

11. Method according to Claim 10, in which the position of the grooves (22) and of the bridges (21) is arranged in such a way that it is possible to join at least three bridges (21) with at least one line making a given angle with the longitudinal direction of the final strip without the said line or lines being secant to a single groove.

12. Method according to one of Claims 10 and 11, in which the lateral grooves arranged on the two lateral parts of the final continuous strip (36d, 36e) are open-ended.

13. Method according to Claim 12, in which the width ($J_2$) of the end of the lateral grooves situated on the open-ended side is greater than the width ($J_1$) of the end of the lateral grooves situated on the internal side of the final continuous strip (36e).

14. Method according to one of Claims 6 to 13, in which the distance between two consecutive grooves (22) corresponds to the width (B) of an elementary width (20).

15. Method according to one of Claims 6 to 14, in which the grooves (22) are rectilinear.

16. Method according to one of Claims 6 to 15, in which the orthogonal distance ($B_1$, $B_2$) between the grooves (22) is variable (36c).

EP 2 794 296 B1

Fig 1

Fig 2

Fig 3

Fig 4

Fig 5

**Fig 6**

**Fig 7**

Fig 8

Fig 9

Fig 10

**R**

**35**

**90**

**9**

**91**

**α**

**22**

**36**

**Fig 11**

**36**

**8**

**R**

**81**

**Fig 12**

**Fig 13**

**Fig 14**

**Fig 15**

**Fig 16**

**Fig 17**

**EP 2 794 296 B1**

**Documents brevets cités dans la description**

- WO 2010115860 A

- WO 2010115861 A